# EUROPÄISCHE PATENTSCHRIFT

(11) **EP 1 395 420 B1**
(45) Veröffentlichungstag und Bekanntmachung des Hinweises auf die Patenterteilung: **09.08.2006**
(21) Anmeldenummer: 02745346.3
(22) Anmeldetag: 03.06.2002
(51) Int. Cl.: B30B 9/30, B65G 17/08

(54) **GLIEDERBAND, INSBESONDERE FÜR RUNDBALLENPRESSEN**
LINK CONVEYOR, ESPECIALLY FOR ROUND-BALE PRESSES
BANDE ARTICULEE, NOTAMMENT POUR DES PRESSES A BALLOTS RONDS

(30) Priorität: 02.06.2001 DE 20109161 U
(43) Veröffentlichungstag der Anmeldung: 10.03.2004
(73) Patentinhaber: Schuster, Thomas, 87754 Kammlach (DE)
(72) Erfinder: Schuster, Thomas, 87754 Kammlach (DE)
(74) Vertreter: Fiener, Josef
(86) Internationale Anmeldenummer: PCT/EP2002/006056
(87) Internationale Veröffentlichungsnummer: WO 2002/098640

(56) Entgegenhaltungen:
- EP-A- 0 459 691
- WO-A-00/06367
- DE-A- 19 911 457
- DE-U- 9 321 344
- US-A- 5 083 659

## Beschreibung

Die Erfindung betrifft ein Gliederband, insbesondere für Rundballenpressen zum Verpressen von Müll, mit einer Vielzahl von Aluminium-Gliederleisten, insbesondere aus Mehrkammer-Strangpreßprofilen, die an ihren jeweiligen Enden miteinander gelenkig über Rundstäbe verbunden sind.

Ein derartiges Gliederband ist aus der WO 00/06367 bekannt. Hierbei sind die einzelnen Gliederleisten des Gliederbandes durch Stäbe verbunden, die auf einer Seite in Bohrungen mit Spielpassung und auf der entgegengesetzten Seite in Bohrungen mit Übergangspassung eingesetzt sind. Diese Bearbeitung der Bohrungen mit unterschiedlichen Toleranzen ist selbst bei der Ausführung als Strangpreßteil fertigungstechnisch sehr aufwendig. Zudem ist insbesondere in der Bohrung mit Spielpassung der Verschleiß relativ groß, so daß das Endlosband insbesondere beim Einsatz beim Verpressen von Müll relativ stark verschleißt. Hierbei ist zu bedenken, daß ein derartiges Gliederband eine Länge von mehr als 10 m aufweisen kann und aus mehr als 200 Gliederleisten bestehen kann. Bei Erreichen der Verschleißgrenze muß somit das gesamte Gliederband ausgetauscht werden, was sehr zeit- und kostenaufwendig ist, da die Stäbe häufig verkantet und/oder unrund sind, so daß diese kaum mehr aus den Bohrungen zu demontieren sind.

Demzufolge liegt der Erfindung die Aufgabe zugrunde, ein Gliederband zu schaffen, das einfacher herzustellen und mit weniger Verschleiß behaftet ist, so daß insgesamt eine höhere Standzeit und günstigere Kosten erzielt werden.

Diese Aufgabe wird gelöst durch ein Gliederband gemäß den Merkmalen des Anspruches 1. Bevorzugte Ausführungsformen sind Gegenstand der Unteransprüche.

Durch das Einsetzen der Stäbe in Langlochprofile können die im Aluminium-Strangpreßverfahren hergestellten Gliederleisten in einfacher Weise und ohne aufwendige Fertigung eingesetzt werden. Hierdurch wird eine wesentliche Kostenersparnis erzielt. Zudem weisen die Langlochprofile, insbesondere am vorauslaufenden Ende, eine größere Wandstärke auf, so daß hierdurch ein gezielter Verschleißbereich geschaffen wird. Weiterhin gestaltet sich bei der Montage das Einsetzen und bei der Demontage das Entnehmen der Rundstäbe in die Langlochprofile besonders einfach, da die Rundstäbe einfacher in den durchmessergrößeren Bereich des Langlochprofiles eingefügt und dort fixiert bzw. entnommen werden können.

Dies erfolgt beispielsweise mittels in Bandlaufrichtung ausgerichteten Schrauben, die in einem der benachbarten Kammerprofile der Gliederleisten eingesetzt sind. In besonders vorteilhafter Ausgestaltung werden die Rundstäbe durch um einige Winkelgrade konisch zulaufende Schrägen geklemmt, so daß beim Reckvorgang nach der Montage die Rundstäbe in die Öse des Langlochprofils gezogen und dort fixiert werden, da sich die Öse dabei geringfügig aufweitet. Diese Klemmung verhindert das beim Stand der Technik vorhandene Mitdrehen des Stabes, wobei zugleich eine axiale Fixierung gewährleistet wird. Zur Demontage genügt hierbei ein leichter Hammerschlag, so daß der Rundstab dann leicht entnommen werden kann.

Nachfolgend wird ein Ausführungsbeispiel des Gliederbandes anhand der Zeichnungen näher erläutert und beschrieben. Hierbei zeigen:
- Fig. 1: eine Seitenansicht auf ein Gliederband, das um ein Umlenkrad umläuft;
- Fig. 2: eine Draufsicht auf einen Bereich des Gliederbandes, das teilweise geschnitten dargestellt ist;
- Fig. 3: eine Schnitt-Seiten-Ansicht gemäß Pfeil A in Fig. 2 mit Darstellung einer Fixierungsmöglichkeit;
- Fig. 4: eine vergrößerte Darstellung zweier Gliederleisten, einmal im Neuzustand (links) und einmal beim Errreichen der Verschleißgrenze (rechts); und
- Fig. 5: eine weiterhin vergrößerte Darstellung einer Gliederleiste mit Klemmung eines Rundstabes beim Reckvorgang.

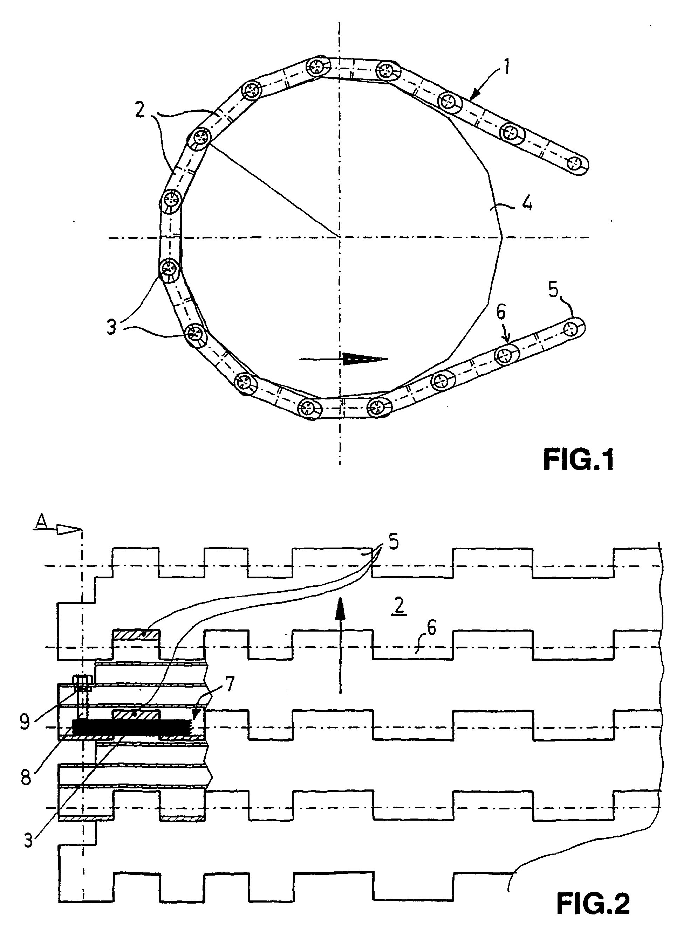

In Fig. 1 ist ein Gliederband 1 dargestellt, das aus einer Vielzahl von Gliederleisten 2 besteht. Beim Einsatz in einer Rundballenpresse gemäß dem eingangs genannten Stand der Technik sind beispielsweise ca. 200 Gliederleisten 2 zur Bildung des Gliederbandes 1 vorgesehen, so daß sich bei einer Einzelbreite von ca. 60 mm eine Gesamtlänge des Gliederbandes 1 von ca. 12 Metern ergibt. Das Gliederband 1 läuft hierbei um mehrere Antriebs- bzw. Umlenkräder 4 um, wobei hier jedoch nur eines dargestellt ist. Dieses Umlenkrad 4 ist mit einem an die Leistenbreite (von hier ca. 60 mm) angepaßten Polygonprofil versehen, so daß auch im gespannten bzw. gereckten Zustand bei Erreichen der Standzeit noch ein sicherer Antrieb gewährleistet ist.

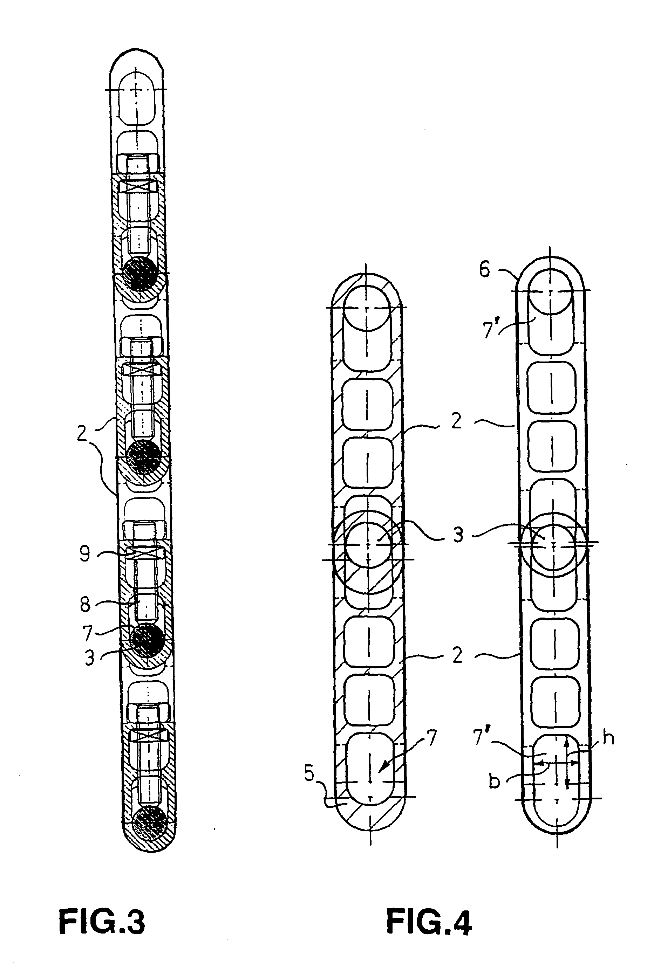

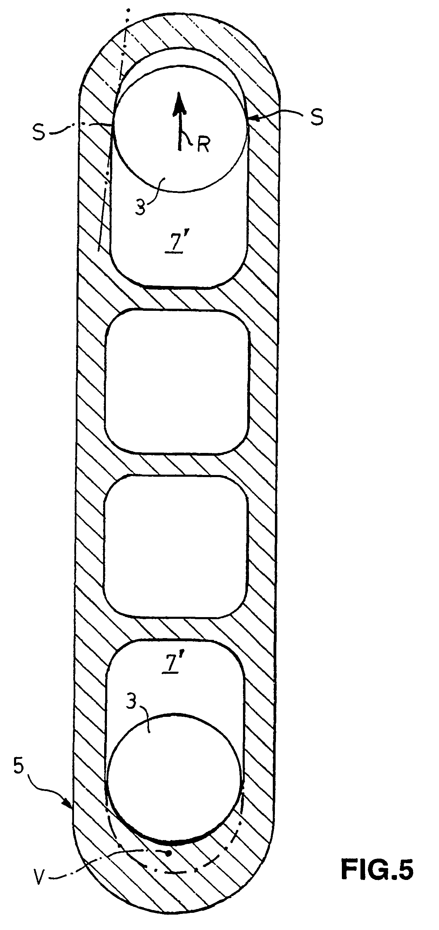

Der Verschleiß des Gliederbandes 1 ergibt sich insbesondere durch Verschleiß im Bereich der Rundstäbe 3, die die Gelenkstellen für die Gliederleisten 2 bilden. Da das Gliederband 1 insbesondere beim Verpressen von Müll sehr rauhen Bedingungen unterworfen ist, insbesondere die Gelenkstellen mit Staub und Schmutz direkt in Kontakt gelangen, kommt der Gestaltung dieser Gelenkstellen an den Rundstäben 3 wesentliche Bedeutung zu. So ist insbesondere an dem in Bandlaufrichtung (vgl. Pfeil in Fig. 1 und 2) vorlaufenden Ende 5 jede Gliederleiste 2 mit einer verdickten Wandstärke ausgebildet, um hier eine Art "Verschleißbereich" zu definieren (vgl. auch Bereich V in Fig. 5). Das nachlaufende Ende 6 jeder Gliederleiste 2 (vgl. auch Fig. 4 und 5) ist mit einer demgegenüber gleichbleibenden Wandstärke stranggepreßt, kann jedoch auch eine verdickte Wandstärke aufweisen.

In Fig. 2 ist eine Draufsicht auf ein Gliederband 1 dargestellt, woraus die jeweils mäanderförmig laufende Gestaltung der Gliederleisten 2 ersichtlich ist, ebenso die darin eingesetzten Rundstäbe 3. Auch hier ist für das vorlaufende Ende 5 die Verdickung der Wandstärke, insbesondere gegenüber der übrigen Wandstärke des Mehrkammer-Strangpreßprofils ersichtlich. Weiterhin ist hieraus die Gestaltung der Gelenkstelle als Langlochprofil 7 ersichtlich, in die jeweils ein Rundstab 3 eingesetzt ist. Dieser wird durch je eine Schraube 8 fixiert, die in Bandlaufrichtung ausgerichtet ist.

In Fig. 3 ist eine vergrößerte Darstellung dieser Fixierungsmöglichkeit in Seitenansicht gezeigt. Die vorstehend genannten Schrauben 8 werden hierbei durch Kontermuttern 9 in bzw. an einer benachbarten Kammer des Gliederprofils 2 fixiert, so daß eine sichere Halterung der Rundstäbe 3 in dem Langlochprofil 7 möglich ist, insbesondere wenn die Rundstäbe 3 an ihren Enden am Angriffpunkt der Schrauben 8 abgeflacht sind. Wesentlich ist hierbei die Gestaltung des Langlochprofiles 7 mit einem Halbkreis-Bereich und einem sich daran anschließenden Rechteck-Lochbereich 7'.

Dieser Rechteck-Lochbereich 7' weist gemäß der vergrößerten Darstellung in Fig. 4 (und auch Fig. 5) eine Breite b auf, die etwas größer ist als der Durchmesser des Rundstabes 3. Hierdurch ergibt sich ein besonders einfaches Einsetzen der Rundstäbe 3 bei der Montage bzw. beim Austausch des Gliederbandes 1. Weiterhin wird das Einfügen der Rundstäbe 3 durch eine vordefinierte Höhe h des Rechteck-Lochbereiches 7' erreicht, die nämlich etwas größer als der Durchmesser des Rundstabes 3 ist.

Wie aus Fig. 4 (linke Hälfte) in vergrößerter Darstellung ersichtlich ist, weist das jeweils vorlaufende Ende 5 der Gliederleisten 2 einen relativ zur übrigen Wandstärke verdickten Bereich auf, so daß sich hierdurch eine definierte Verschleißzone ergibt. Im rechten Bereich der Fig. 4 ist dabei der Zustand der Gliederleisten 2 bei Erreichen der Verschleißgrenze dargestellt, wie auch aus der gereckten Länge und der verschmälerten Verschleißzone ersichtlich ist. Die Standzeit wird jedoch gegenüber dem eingangs genannten Stand der Technik wesentlich erhöht, da gegenüber den dort vorgeschlagenen Bohrungen die Rundstäbe 3 dicker ausgeführt werden können, so daß sich die Flächenpressung in den Gelenkstellen bei ansonsten gleichen Abmessungen reduziert.

In Fig. 5 unten ist der Verschleißbereich mit dem Bezugszeichen V gekennzeichnet und strichliert angedeutet. Im oberen Bereich von Fig. 5 ist der Übergang des Langlochprofils 7, genauer dessen Rechteck-Lochbereichs 7' zu dem Halbkreis-Bereich, an dem der Rundstab 3 jeweils anliegt, vergrößert dargestellt, wobei der Übergang mit konisch bzw. spitz zulaufenden Schrägen S ausgebildet ist. Die Schrägen S sind dabei um einige Winkelgrade (etwa 6°) zur Mittelachse geneigt, wie aus der doppelt strichpunktierten "Tangente" ersichtlich ist. Hierdurch ergibt sich (alternativ zur Befestigung mit Schrauben gemäß Fig. 3) ebenfalls eine Fixierung des Rundstabes 3, da dieser bei der Spann- und Reckbewegung (gemäß Pfeil R) in die so gebildete Öse des Langlochprofils 7 hineingezogen und durch die Aufweitung des Ösenbereiches axial und rotatorisch geklemmt wird. Es sei darauf hingewiesen, daß diese Klemmung durch einen leichten Hammerschlag auf den Rundstab 3 in entgegengesetzter Richtung besonders leicht zu lösen ist, was insbesondere bei stark verschmutzten oder gar korrodierten Gliederbändern für die Demontage von wesentlicher Bedeutung ist.

Obwohl sich das vorgeschlagene Gliederband insbesondere für Rundballenpressen der eingangs genannten Art eignet, kann es auch für gepanzerte Rolltore, Förderbänder, als Kettenbänder bei Pistenraupen und dgl. eingesetzt werden. Je nach Anwendung können an den Flachseiten auch Mitnehmerstege oder sonstige Profilierungen vorgesehen sein.

## Patentansprüche

1. Gliederband, insbesondere für Rundballenpressen zum Verpressen von Müll, mit einer Vielzahl von Aluminium-Gliederleisten (2), insbesondere aus Mehrkammer-Strangpreßprofilen, die an ihren jeweiligen Enden miteinander gelenkig über Rundstäbe (3) verbunden sind,
**dadurch gekennzeichnet, daß**
die Rundstäbe (3) in Langlochprofile (7) eingesetzt sind.

2. Gliederband nach Anspruch 1, **dadurch gekennzeichnet, daß** die Langlochprofile (7) aus je einem Halbkreis-Bereich und einem sich daran anschließenden Rechteck-Lochbereich (7') bestehen, dessen Breite (b) geringfügig größer als der Durchmesser der Rundstäbe (3) ist.

3. Gliederband nach Anspruch 2, **dadurch gekennzeichnet, daß** die Höhe (h) des Rechteck-Lochbereiches (7') geringfügig größer als der Durchmesser der Rundstäbe (3) ist.

4. Gliederband nach Anspruch 2 oder 3, **dadurch gekennzeichnet, daß**
der Übergang zwischen Rechteck-Lochbereich (7') und dem Halbkreisbereich, insbesondere am nachlaufenden Ende (6) kontinuierlich aufeinander zulaufend ausgebildet ist, insbesondere mittels konischen Schrägen (S).

5. Gliederband nach einem der Ansprüche 1 bis 4, **dadurch gekennzeichnet, daß**
die Wandstärke des Halbkreis-Bereiches des Langlochprofils (7), insbesondere am vorlaufenden Ende (5) dicker als die übrige Wandstärke der Gliederleisten (2) ausgebildet und als Verschleißbereich (V) vorgesehen ist.

6. Gliederband nach einem der Ansprüche 1 bis 5, **dadurch gekennzeichnet, daß**
die Rundstäbe (3) mit in Bandlaufrichtung ausgerichteten Schrauben (8) fixiert oder durch um wenige Winkelgrade geneigt verlaufende Schrägen (S) im Langlochprofil (7) geklemmt sind.

7. Gliederband nach Anspruch 6, **dadurch gekennzeichnet, daß** die Schrauben (8) durch jeweils eine Kontermutter (9) in einer Kammer der Gliederleisten (3) gekontert sind.

8. Gliederband nach einem der Ansprüche 1 bis 7, **dadurch gekennzeichnet, daß**
die Rundstäbe (3) aus vergütetem Stahl bestehen.

9. Einrichtung mit einem Gliederband (1) nach einem der Ansprüche 1 bis 8 und Antriebs- und/oder Umlenkräder (4) für das Gliederband, wobei die Antriebs- und/oder Umlenkräder ein Polygonprofil aufweisen.

## Claims

1. A link conveyor, especially for round-bale presses for compacting garbage, comprising a plurality of aluminum link strips (2) which especially consist of multi-chamber extruded profiles which are mutually interconnected at their ends in an articulated manner by means of round rods (3),
**characterized in that**
the round rods (3) are inserted into oblong hole profiles (7).

2. A link conveyor as claimed in claim 1, **characterized in that** the oblong hole profiles (7) consist of one each of a semi-circular region and an adjacent rectangular hole region (7') whose width (b) is slightly larger than the diameter of the round rods (3).

3. A link conveyor as claimed in claim 2, **characterized in that** the height (h) of the rectangular hole region (7') is slightly larger than the diameter of the round rods (3).

4. A link conveyor as claimed in claim 2 or 3, **characterized in that** the transition between rectangular hole region (7') and the semi-circular region, especially at the trailing end (6), is provided with a continuously mutually approaching arrangement, especially by means of conical inclines (S).

5. A link conveyor as claimed in one of the claims 1 to 4, **characterized in that** the wall thickness of the semi-circular region of the oblong hole profile (7), especially at the leading end (5), is provided with a thicker arrangement than the remainder of the wall thickness of the link strips (2) and is provided as a wearing zone (V).

6. A link conveyor as claimed in one of the claims 1 to 5, **characterized in that** the round rods (3) are fixed with screws (8) aligned in the running direction of the conveyor or are clamped by means of inclines (S) in the oblong hole profile (7), which inclines extend inclined by a few degrees of angle.

7. A link conveyor as claimed in claim 6, **characterized in that** the screws (8) are each fixed by one locknut (9) in a chamber of the link strips (3).

8. A link conveyor as claimed in one of the claims 1 to 7, **characterized in that** the round rods (3) are made of quenched and subsequently drawn steel.

9. Means comprising a link conveyor (1) as claimed in one of the claims 1 to 8 and drive and/or deflection pulleys (4) for the link conveyor (1), wherein the drive and/or deflection pulleys have a polygonal profile.

## Revendications

1. Bande articulée, notamment pour des presses à ballots ronds destinées au compactage de déchets, avec une pluralité de barres articulées d'aluminium (2), constituées en particulier de profilés filés à chambres multiples, qui sont reliées sur leurs extrémités respectives les unes aux autres de manière articulée par des barres rondes (3), **caractérisée en ce que**
les barres rondes (3) sont logées dans des profils à trou oblong (7).

2. Bande articulée selon la revendication 1, **caractérisée en ce que** les profils à trou oblong (7) se composent respectivement d'une zone en demi-cercle et d'une zone perforée rectangulaire (7') s'y raccordant, dont la largeur (b) est légèrement supérieure au diamètre des barres rondes (3).

3. Bande articulée selon la revendication 2, **caractérisée en ce que** la hauteur (h) de la zone perforée rectangulaire (7') est légèrement supérieure au diamètre des barres rondes (3).

4. Bande articulée selon la revendication 2 ou 3, **caractérisée en ce que**
le passage entre la zone perforée rectangulaire (7') et la zone en demi-cercle, notamment sur l'extrémité arrière (6), est conçu de manière à se rétrécir en continu, en particulier au moyen d'inclinaisons coniques (S).

5. Bande articulée selon l'une quelconque des revendications 1 à 4, **caractérisée en ce que**
l'épaisseur des parois de la zone en demi-cercle du profil à trou oblong (7), notamment sur l'extrémité avant (5), est conçue de manière plus épaisse que l'autre épaisseur de paroi des barres articulées (2) et est prévue comme zone d'usure (V).

6. Bande articulée selon l'une quelconque des revendications 1 à 5, **caractérisée en ce que**
les barres rondes (3) sont fixées avec des vis (8) orientées dans le sens de déplacement de la bande ou serrées par des inclinaisons (S) de quelques degrés prévues dans le profil à trou oblong (7).

7. Bande articulée selon la revendication 6, **caractérisée en ce que** les vis (8) sont respectivement bloquées avec un contre-écrou (9) dans une chambre des barres articulées (2).

8. Bande articulée selon l'une quelconque des revendications 1 à 7, **caractérisée en ce que**
les barres rondes (3) se composent d'acier de traitement.

9. Dispositif avec une bande articulée (1) selon l'une quelconque des revendications 1 à 8 et roues d'entraînement et/ou de renvoi (4) pour la bande articulée, les roues d'entraînement et/ou de renvoi présentant un profil polygonal.
